# EUROPÄISCHE PATENTSCHRIFT

(11) **EP 2 082 220 B1**
(45) Veröffentlichungstag und Bekanntmachung des Hinweises auf die Patenterteilung: **14.11.2018**
(21) Anmeldenummer: 07820061.5
(22) Anmeldetag: 07.09.2007
(51) Int. Cl.: G01N 27/407, G01N 15/06

(54) **VERFAHREN UND VERWENDUNG DES VERFAHRENS ZUR BESTIMMUNG DER PARTIKEL- UND GASKONZENTRATION EINES GASGEMISCHES**
METHOD AND USAGE OF THE METHOD FOR DETERMINING THE PARTICLE AND GAS CONCENTRATION OF A GAS MIXTURE
PROCÉDÉ ET SON UTILISATION DE DÉTERMINATION DE LA CONCENTRATION EN PARTICULES ET EN GAZ D'UN MÉLANGE GAZEUX

(30) Priorität: 12.10.2006 DE 102006048354
(43) Veröffentlichungstag der Anmeldung: 29.07.2009
(73) Patentinhaber: Robert Bosch GmbH, 70442 Stuttgart (DE)
(72) Erfinder: MOSER, Thomas, 71701 Schwieberdingen (DE); KAMP, Bernhard, 71640 Ludwigsburg (DE)
(86) Internationale Anmeldenummer: PCT/EP2007/059395
(87) Internationale Veröffentlichungsnummer: WO 2008/043626

(56) Entgegenhaltungen:
- EP-A- 1 026 502
- DE-A1- 10 322 427
- DE-A1-102005 015 103
- DE-A1-102005 021 131
- DE-A1-102006 009 066
- US-A1- 2003 196 499
- US-A1- 2006 016 687

## Beschreibung

Die vorliegende Erfindung betrifft ein Verfahren zur Bestimmung von Bestandteilen eines Gasgemisches.

### Stand der Technik

Der effektive Einsatz von Abgasnachbehandlungssystemen setzt deren Kontrolle hinsichtlich ihrer Funktionstüchtigkeit im Dauereinsatz voraus. Moderne Abgasnachbehandlungssysteme umfassen dabei zum einen geeignete Vorrichtungen zur Filterung des Abgases wie bspw. Dieselpartikelfilter und zum anderen Katalysatoren, die die chemische Umsetzung unerwünschter gasförmiger Abgasbestandteile mit und ohne geeigneter Additive zum Abgas in effektiver Weise gestatten. Es werden somit Sensoren benötigt, mit denen auch im Langzeitbetrieb eine bspw. genaue Ermittlung der aktuell in einem Verbrennungsabgas vorliegenden Partikelkonzentration wie auch der Konzentration gasförmig vorliegender Abgasbestandteile ermöglicht wird. Bisher kommen zu diesem Zweck jeweils separate Sensoren zum Einsatz.

So erfolgt bspw. die Überwachung der Funktionsfähigkeit eines Dieselpartikelfiltes u.a. mit Hilfe von Differenzdruckverfahren oder von Partikelsensoren. So ist bspw. aus der DE 101 24 907 A1 ein Sensor zur Detektion von Ruß in einem Fluidstrom bekannt, der auf der Basis eines keramischen Substrats ausgeführt ist. Er umfasst mehrere voneinander beabstandete Messelektroden, die dem zu untersuchenden Verbrennungsabgas ausgesetzt sind. Lagert sich zwischen den Messelektroden Ruß ab, so kommt es zu einer Reduzierung des Isolationswiderstandes des keramischen Materials. Dies wird detektiert und einer Rußkonzentration im Fluidstrom zugeordnet. Ein Heizelement des Sensors ermöglicht es, die Elektroden bzw. deren Umgebung auf thermischem Wege von abgelagerten Rußpartikeln zu befreien.

Die Überwachung der Funktionsfähigkeit eines Oxidationskatalysators wird derzeit mit Hilfe von Temperatursensoren nach (bzw. vor und nach) dem Oxidationskatalysator realisiert. Diese registrieren im Falle einer Einbringung von Kohlenwasserstoffen in das Abgas deren Oxidation an einem intakten Oxidationskatalysator über die Exothermie der Kohlenwasserstoffverbrennung. Der Nachteil des Verfahrens ist, dass nur eine sehr grobe Überwachung der Wirksamkeit des Oxidationskatalysators möglich ist. Eine alternative Überwachung des Oxidationskatalysators erfolgt durch Verwendung eines speziellen Sensors für Kohlenwasserstoffe oder Kohlenmonoxid.

Ein solcher ist beispielsweise aus der DE 199 32 048 A1 bekannt. Es handelt sich dabei um ein keramisches Sensorelement, dass eine erste, eine Gleichgewichtseinstellung des Abgases nur wenig katalysierende Messelektrode sowie eine zweite, katalytisch aktive Messelektrode aufweist. Aus einer zwischen den Elektroden resultierenden Potentialdifferenz wird u.a. die Konzentration von Kohlenwasserstoffen im Abgas bestimmt.

Weitere Verfahren sind aus der DE 10 2006 009066 A1, der DE 10 2005 015103 A1, der EP-A-1 026 502 und der DE 103 22 427 A1 bekannt.

Es werden somit für die Bestimmung von Partikeln bzw. von gasförmigen Bestandteilen des Abgases jeweils eigene Sensoren benötigt, wodurch Zusatzkosten verursacht werden.

### Aufgabe und Vorteile der Erfindung

Aufgabe der vorliegenden Erfindung ist es, ein Verfahren bereitzustellen, mit dem sowohl die Konzentration an Partikeln als auch die Konzentration zumindest einer gasförmigen Komponente des Gasgemisches bestimmt werden kann. Diese Aufgabe wird durch ein Verfahren mit den Merkmalen des Anspruchs 1 gelöst.

Dies beruht insbesondere darauf, dass die Bestimmung der Konzentration an Partikeln und der Konzentration zumindest einer gasförmigen Komponente des Gasgemisches insbesondere zeitversetzt mittels demselben Sensorelement erfolgt.

Weitere vorteilhafte Ausführungsformen des vorliegenden Sensorelements bzw. Verfahrens zum Betrieb desselben ergeben sich aus den Unteransprüchen.

Erfindungsgemäß erfolgt die Bestimmung der Partikelkonzentration vorteilhafterweise durch Bestimmung eines elektrischen Widerstandes zwischen ersten Messelektroden des Sensorelementes und die Bestimmung der Konzentration der gasförmigen Komponente durch Bestimmung eines an zweiten entsprechenden Messelektroden des Sensorelementes anliegenden elektrischen Potentials oder Pumpstromes. Auf diese Weise kann sowohl die Partikelkonzentration als auch die Konzentration gasförmiger Abgasbestandteile mittels demselben Sensorelement erfasst werden.

Erfindungsgemäß erfolgt eine zeitversetzte Bestimmung beider Konzentrationen. So wird in einem ersten Zeitraum die Konzentration an Partikeln im Abgas bestimmt und in einem zweiten Zeitraum die Konzentration mindestens einer gasförmigen Komponente des Gasgemisches. Dazu wird das Sensorelement im ersten Zeitraum auf der Temperatur des zu messenden Gasgemisches gehalten und im zweiten Zeitraum auf eine Temperatur von mindestens 450°C aufgeheizt.

Da die Temperatur eines Abgases eines Verbrennungsmotors üblicherweise bei ungefähr 250 °C liegt, ist bei der im ersten Zeitraum am Sensorelement anliegenden Temperatur die von der Partikelkonzentration im Abgas abhängige Bestimmung eines elektrischen Widerstandes zwischen Messelektroden möglich, da jedoch bei dieser Temperatur ein im Sensorelement vorgesehenes und den Messelektroden zugeordnetes Festelektrolytmaterial noch nicht leitfähig ist, wird dieser Messwert nicht durch auftretende Potenzialschwankungen an den Messelektroden bedingt durch die Existenz gasförmiger Abgasbestandteile beeinträchtigt.

Im zweiten Zeitraum dagegen ist aufgrund der erhöhten Temperatur des Sensorelementes zum einen mit einem Abbrand darauf abgelagerter Rußpartikel zu rechnen und zum anderen wird das im Sensorelement vorgesehene Festelektrolytmaterial leitfähig für Ionen. Dies ermöglicht die Bestimmung gasförmiger Abgasbestandteile auf elektrochemischem Wege, ohne dass es zu einer Beeinträchtigung des Messsignals durch sich auf dem Sensorelement ablagernde Rußpartikel kommt. Der Vorteil dieser Vorgehensweise besteht darin, dass auch mit einem Sensorelement mit vereinfachtem Aufbau eine parallele Bestimmung der Partikelkonzentration und der Konzentration an gasförmigen Abgasbestandteilen möglich ist. Um bereits während dem Übergang von erstem zu zweitem Zeitraum einen vollständigen Abbrand von auf dem Sensorelement abgelagerten Partikeln zu erreichen, ist es von Vorteil, wenn das Sensorelement beim Übergang zumindest kurzzeitig auf eine Temperatur aufgeheizt wird, die über der Betriebstemperatur während des zweiten Zeitraumes liegt. Auf diese Weise kann eine störungsfreie Messung gasförmiger Abgasbestandteile bereits mit Beginn des zweiten Zeitraumes realisiert werden.

Gemäß der vorliegenden Erfindung sind die Messelektroden des Sensorelements auf einem Festelektrolytmaterial angeordnet, das einerseits eine ausreichend hohe Ionenleitfähigkeit aufweist bei gleichzeitig reduzierter elektrischer Leitfähigkeit. Dies ist insbesondere deswegen von Vorteil, weil zwar die Bestimmung gasförmiger Abgasbestandteile auf elektrochemischem Wege das Aufbringen von Messelektroden auf einer ionenleitfähigen Keramik voraussetzt, andererseits die Bestimmung von Partikeln im Abgas die Messung eines elektrischen Widerstandes zwischen den Messelektroden bedingt, auf die sich eine merkliche elektrische Leitfähigkeit negativ ausdrücken würde. Zu diesem Zweck enthält das Festelektrolytmaterial des Sensorelements vorteilhafterweise Dotierungen oder Partikel, die die elektrische Leitfähigkeit des Festelektrolytmaterials heruntersetzen.

Das Verfahren zur Bestimmung von Abgasbestandteile bzw. das Sensorelement zur Durchführung desselben eignet sich in vorteilhafter Weise zur Überprüfung der Funktionstüchtigkeit eines Partikelfilters, Oxidationskatalysators oder Dreiwegekatalysators.

### Ausführungsbeispiele

Die Erfindung wird anhand der Zeichnungen und der nachfolgenden, darauf Bezug nehmenden Beschreibung näher erläutert. Es zeigt
- Figur 1: die schematische Darstellung eines Sensorelementes zur Bestimmung von Bestandteilen eines Gasgemisches
- Figur 1b: eine Aufsicht auf einen Ausschnitt des in Figur la dargestellten Sensorelementes
- Figur 2a: die schematische Darstellung eines Sensorelementes zur Bestimmung von Bestandteilen eines Gasgemisches ,
- Figur 2b: das in Figur 2a dargestellte Sensorelement in einem vertikalen Längsschnitt,
- Figur 2c: das in den Figuren 2a, 2b dargestellte Sensorelement in einem horizontalen Längsschnitt entlang der Schnittebene A----A,
- Figur 3a: die schematische Darstellung eines Sensorelementes zur Bestimmung von Bestandteilen eines Gasgemisches in einem vertikalen Längsschnitt,
- Figur 3b: eine Aufsicht auf die Unterseite des in Figur 3a dargestellten Sensorelementes und
- Figur 4: die schematische Darstellung einer möglichen Beschaltung des in Figur la dargestellten Sensorelementes.

In Figur la ist ein prinzipieller Aufbau einer ersten Ausführungsform der vorliegenden Erfindung dargestellt. Mit 10 ist ein keramisches Sensorelement bezeichnet, das der Bestimmung einer Partikelkonzentration, wie beispielsweise der Rußkonzentration, und der Bestimmung einer gasförmigen Komponente eines das Sensorelement umgebenden Gasgemisches dient. Das Sensorelement 10 umfasst beispielsweise eine Mehrzahl von sauerstoffionenleitenden Festelektrolytschichten 11a und 11b. Die Festelektrolytschichten 11a, 11b werden dabei als keramische Folien ausgeführt und bilden einen planaren keramischen Körper. Sie bestehen aus einem sauerstoffionenleitenden Festelektrolytmaterial wie beispielsweise stabilisiertem oder teilstabilisiertem ZrO₂.

Weiterhin weist das Sensorelement beispielsweise eine Vielzahl von elektrisch isolierenden keramischen Schichten 12a, 12b, 12c und 12d auf. Die Schichten 12a - 12d werden vorzugsweise mittels Siebdruck eines pastösen keramischen Materials beispielsweise auf den Festelektrolytschichten 11a, 11b erzeugt. Als keramische Komponente des pastösen Materials wird dabei beispielsweise bariumhaltiges Aluminiumoxid verwendet, da dieses auch bei Temperaturwechselbeanspruchungen über einen langen Zeitraum einen weitgehend konstant hohen elektrischen Widerstand aufweist. Alternativ ist auch die Verwendung von Cerdioxid bzw. der Zusatz anderer Erdalkalioxide möglich.

Die integrierte Form des planaren keramischen Körpers des Sensorelements 10 wird durch Zusammenlaminieren der mit Funktionsschichten sowie den Schichten 12a - 12d bedruckten keramischen Folien 11a, 11b und anschließendem Sintern der laminierten Struktur in an sich bekannter Weise hergestellt.

Das Sensorelement 10 weist weiterhin ein keramisches Heizelement 40 auf, das in Form einer elektrischen Widerstandsleiterbahn ausgeführt ist und der Aufheizung des Sensorelementes 10 insbesondere auf die Temperatur des zu bestimmenden Gasgemischs bzw. zum Abbrand der auf den Großflächen des Sensorelements 10 abgelagerten Rußpartikel dient. Die Widerstandsleiterbahn ist vorzugsweise aus einem Cermet-Material ausgeführt; vorzugsweise als Mischung von Platin oder einem Platinmetall mit keramischen Anteilen, wie beispielsweise Aluminiumoxid. Die Widerstandsleiterbahn ist weiterhin vorzugsweise in Form eines Mäanders ausgebildet und weist an beiden Enden Durchkontaktierungen 42, 44 sowie elektrische Anschlüsse 46, 48 auf. Durch Anlegen einer entsprechenden Heizspannung an die Anschlüsse 46, 48 der Widerstandsleiterbahn kann die Heizleistung des Heizelementes 40 entsprechend reguliert werden.

Auf einer Großfläche des Sensorelements 10 sind beispielsweise zwei Messelektroden 14, 16 aufgebracht, die vorzugsweise als ineinander verzahnte Interdigitalelektroden ausgebildet sind. Die Verwendung von Interdigitalelektroden als Messelektroden 14, 16 ermöglicht vorteilhafterweise eine besonders genaue Bestimmung des elektrischen Widerstandes bzw. der elektrischen Leitfähigkeit des sich zwischen den Messelektroden 14, 16 befindenden Oberflächenmaterials. Zur Kontaktierung der Messelektroden 14, 16 sind im Bereich eines dem Gasgemisch abgewandten Ende des Sensorelements Kontaktflächen 18, 20 vorgesehen. Dabei sind die Zuleitungsbereiche der Elektroden 14, 16 vorzugsweise durch die elektrisch isolierende keramische Schicht 12a gegenüber den Einflüssen eines das Sensorelement 10 umgebenden Gasgemischs abgeschirmt.

Auf der mit den Messelektroden 14, 16 versehenen Großfläche des Sensorelements 10 kann zusätzlich eine aus Übersichtlichkeitsgründen nicht dargestellte poröse Schicht vorgesehen sein, die die Messelektroden 14, 16 in ihrem ineinander verzahnten Bereich gegenüber einem direkten Kontakt mit dem zu bestimmenden Gasgemisch abschirmt. Dabei ist die Schichtdicke der porösen Schicht vorzugsweise größer als die Schichtdicke der Messelektroden 14, 16. Bevorzugt wird die Schutzschicht so ausgeführt, dass Partikel nur wenig eindringen können, wobei jedoch eine ausreichende Durchlässigkeit für Gase gewährleistet sein sollte. Dies kann dadurch erreicht werden, dass eine möglichst geringe Porosität und ein möglichst geringer Porendurchmesser verwendet wird. Um trotz der Existenz der Schutzschicht ein gut auswertbares Messsignal zu erhalten kann bspw. an die Messelektroden 14, 16 eine Wechselspannung angelegt und der resultierende Wechselstrom ausgewertet werden oder es wird eine Messung mit gepulster Gleichspannung durchführt.

Während eines ersten Betriebszeitraumes des Sensorelementes 10 wird an die Messelektroden 14, 16 eine Spannung angelegt. Da das Sensorelement 10 in diesem ersten Betriebszeitraum vorzugsweise ohne wesentliche Beheizung durch Heizelement 40 auf dem Temperaturniveau des zu bestimmenden Gasgemisches betrieben wird, kommt es zunächst im wesentlichen zu keinem Stromfluss zwischen den Messelektroden 14, 16, da die Festelektrolytschicht 11a bei üblichen Abgastemperaturen von max. 250°C nicht nennenswert elektrisch leitfähig ist.

Enthält ein das Sensorelement 10 umströmendes Gasgemisch Partikel, insbesondere Ruß, so lagern sich diese auf der Oberfläche des Sensorelementes 10 ab. Da Ruß eine bestimmte elektrische Leitfähigkeit aufweist, kommt es bei ausreichender Beladung der Oberfläche des Sensorelementes 10 mit Ruß zu einem ansteigenden Stromfluss zwischen den Messelektroden 14, 16, der mit dem Ausmaß der Beladung korreliert.

Wird nun an die Messelektroden 14, 16 eine vorzugsweise konstante Gleich- oder Wechselspannung angelegt und der zwischen den Messelektroden 14, 16 auftretende Stromfluss ermittelt, so kann aus dem Integral des Stromflusses über der Zeit auf die abgelagerte Partikelmasse bzw. auf den aktuellen Partikelmassenstrom, insbesondere Rußmassenstrom, und auf die Partikelkonzentration im Gasgemisch geschlossen werden. Mit dieser Messmethode wird die Konzentration all derjenigen Partikel in einem Gasgemisch erfasst, die die elektrische Leitfähigkeit des sich zwischen den Messelektroden 14, 16 befindenden keramischen Materials positiv oder negativ beeinflussen.

Eine weitere Möglichkeit besteht darin, den Anstieg des Stromflusses über der Zeit zu ermitteln und aus dem Quotienten aus Stromflussanstieg und Zeit bzw. aus dem Differentialquotienten aus Stromfluss nach der Zeit auf die abgelagerte Partikelmasse bzw. auf den aktuellen Partikelmassenstrom, insbesondere Rußmassenstrom, und auf die Partikelkonzentration im Gasgemisch zu schließen. Eine Berechnung der Partikelkonzentration ist auf der Basis der Messwerte möglich, sofern die Strömungsgeschwindigkeit des Gasgemisches bekannt ist. Diese bzw. der Volumenstrom des Gasgemisches kann bspw. mittels eines geeigneten weiteren Sensors bestimmt werden.

Vorzugsweise werden die Messelektroden 14, 16 zusätzlich zur Detektion von gasförmigen Bestandteilen des Gasgemischs, z.B. zur Bestimmung von Kohlenwasserstoffen, herangezogen. Dazu sind die Messelektroden 14, 16 beispielsweise nach dem sogenannten Mischpotentialprinzip ausgelegt. Dazu wird die erste Messelektrode 14 aus einem Material ausgeführt, das die Gleichgewichtseinstellung der gasförmigen Komponenten des Gasgemisches nicht oder nur wenig katalysiert. Dies ist zum Beispiel der Fall, wenn die Messelektroden auf der Basis einer mit Gold und/oder Silber dotierten Platinelektrode ausgeführt wird. Die zweite Messelektrode 16 wird als katalytisch aktive, das Gleichgewicht der gasförmigen Komponenten des Gasgemischs katalysierenden Elektrode, beispielsweise als Platinelektrode, ausgeführt.

Dabei werden beide Messelektroden 14, 16 einem Feinstrukturierungsverfahren beispielsweise auf Basis eines Druckvorgangs oder einer Fotofeinstrukturierung in einem Schritt auf die Festelektrolytschicht 11a aufgebracht. Anschließend wird die erste Messelektrode 14 durch ein insbesondere galvanisches Verfahren gezielt mit einem Metall dotiert, das die katalytische Aktivität der Messelektrode 14 herabsetzt. Danach erfolgt gegebenenfalls eine Wärmebehandlung, durch die eine Homogenisierung der galvanisch nachbehandelten ersten Messelektrode 14 erreicht wird.

Da die Messelektroden 14, 16 dem Gasgemisch ausgesetzt sind, liegt an der erste Messelektrode 14 ein von der Sauerstoffkonzentration des Gasgemischs abhängiges Potenzial an, wobei die relevante Sauerstoffkonzentration nicht durch katalytisch induzierte Redoxreaktionen zwischen reduzierenden Gaskomponenten und Sauerstoff vermindert ist. Demgegenüber liegt an der zweite Messelektrode 16 ein Potenzial an, das eine Sauerstoffkonzentration repräsentiert, das durch die an dieser Elektrode stattfindenden Gleichgewichtsreaktionen im Vergleich zu dem an der Messelektroden 14 anliegenden Potenzial vermindert ist. Die Potentialdifferenz wird erfasst und stellt ein Maß für die Konzentration an reduzierenden Gaskomponenten im Gasgemisch dar. Die Bestimmung der Potentialdifferenz setzt jedoch eine Messtemperatur von mindestens 450 °C voraus, da erst oberhalb dieser Temperatur das Material der Festelektrolytschicht 11a ausreichend ionenleitfähig wird.

Daher wird in einem zweiten Betriebszeitraum zur Bestimmung gasförmiger, insbesondere reduzierender Komponenten des Gasgemischs, wie beispielsweise Kohlenwasserstoffe, Wasserstoff oder Methan, das Sensorelement 10 mittels des Heizelementes 40 auf eine Temperatur von mindestens 450 °C, vorzugsweise auf 500 °C aufgeheizt. Zu Beginn des zweiten Betriebszeitraums kommt es zunächst zum Abbrand der während des ersten Betriebszeitraums auf dem Sensorelement 10 abgelagerten Russpartikel. Daran anschließend ist die Messung des sich zwischen den Messelektroden 14, 16 ausbildenden Mischpotenzials auf stromlosem Wege möglich.

Um eine möglichst störungsfreie Bestimmung der Partikelkonzentration während des ersten Betriebszeitraums zu gewährleisten, wird zumindest die Festelektrolytschicht 11a aus einem Festelektrolytmaterial ausgeführt, das als lonenleiter über eine hohe Aktivierungsenergie verfügt und somit keine nennenswerte Leitfähigkeit bei Temperaturen von bis zu 250 °C zeigt. Es ist somit vorteilhaft, wenn das Niveau der ionischen Leitfähigkeit des lonenleiters insgesamt abgesenkt wird, um im ersten Betriebszeitraum für die Bestimmung von Partikeln eine möglichst hohe Isolationswirkung zu erzielen. Da bei der im zweiten Betriebszeitraum vorgenommenen Mischpotentialmessung nur vergleichsweise geringe Stromstärken benötigt werden, wird die Mischpotentialmessung dadurch nicht beeinträchtigt.

Die Absenkung der lonenleitfähigkeit kann bspw. durch Zusatz von Dotierstoffen zum Festelektrolytmaterial der Festelektrolytschicht 11a erfolgen, da dies die Aktivierungsenergie des Ladungsträgertransportes erhöht. So kann z.B. Zirkonoxid als lonenleiter mit einem zweiwertigen Element wie u.a. Calcium anstelle des üblicherweise eingesetzten Yttrium dotiert werden. Günstig sind beispielsweise Dotierkonzentrationen im Bereich von 0.01 bis 12 mol% CaO, da so die elektrische Leitfähigkeit des Festelektrolytmaterials deutlich reduziert wird. So ist bei einer Dotierung von 8 mol% CaO in ZrO₂ die Leitfähigkeit des Festelektrolytmaterials um ca. eine Größenordnung kleiner als bei einer Dotierung von 8 mol% Y₂O₃ in ZrO₂.

Eine weitere Möglichkeit besteht darin, im Festelektrolytmaterial lediglich eine Dotierung mit Yttriumoxid vorzusehen, dabei jedoch die Menge an zugesetztem Yttrium deutlich herabzusetzen auf einen Gehalt von 2 bis 3.5 mol% Y₂O₃.

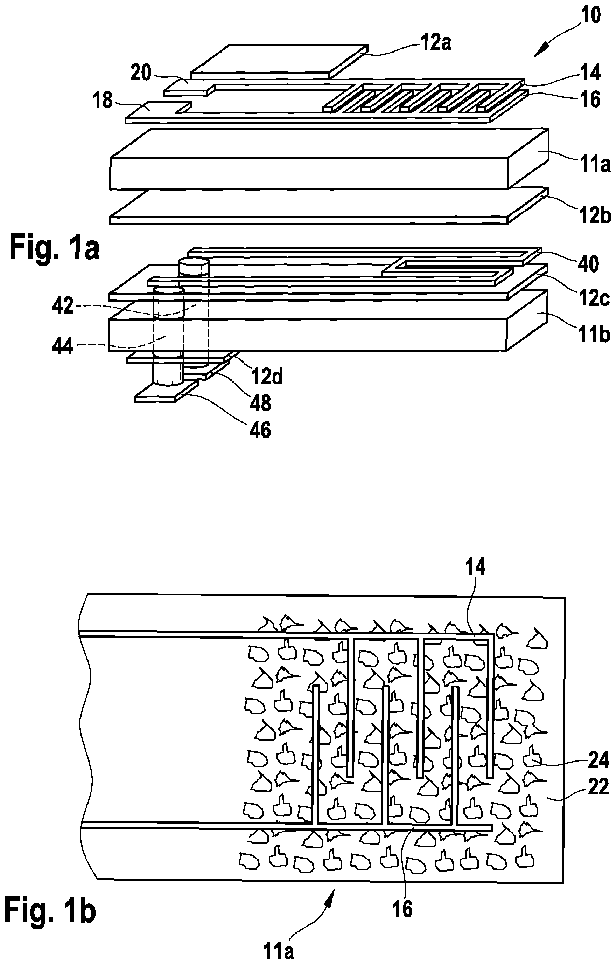

Eine in Figur 1b dargestellte Alternativlösung sieht vor, als Festelektrolytmaterial der Festelektrolytschicht 11a ein Verbundmaterial aus einem lonenleiter 22 und einem elektrisch isolierenden keramischen Material 24 vorzusehen. Vorzugsweise werden die einzusetzenden Materialien so gewählt, dass es beim Sintern der Festelektrolytschicht 11a nicht zu einer Vermischung beider Materialien kommt, sondern ein zweiphasiges Verbundmaterial entsteht. Dabei wird die Menge an ionenleitendem Material 22 so gewählt, dass leitende Strompfade innerhalb des entstehenden Verbundmaterials erhalten bleiben. Durch das Einbringen des in Form von Partikeln vorliegenden, elektrisch isolierenden zweiten keramischen Materials 24 werden die durch das ionenleitende Material erzeugten Strompfade jedoch verlängert, wodurch die Gesamtleitfähigkeit des Substrates sinkt. Dazu werden 50 bis 75 Vol.% des Verbundmaterials aus dem elektrisch isolierenden keramischen Material 24 gebildet. Als elektrisch isolierendes Material 24 eignen sich grundsätzlich die zur Erzeugung der eletrisch isolierenden keramischen Schichten 12a - 12d geeigneten Materialien sowie Cordierit.

Alternativ ist denkbar, das Verbundmaterial aus einem lonenleiter 22 und einem elektrisch isolierenden keramischen Material 24 als separate Zwischenschicht zwischen der Festelektrolytschicht 11a und den Messelektroden 14, 16 vorzusehen.

Während des ersten Betriebszeitraumes kann es bedingt durch das Anlegen hoher Spannungen an die Messelektroden 14, 16, wie sie für den Nachweis von Partikeln erforderlich ist, zu Zersetzungsprozessen des Festelektrolytmaterials der Festelektrolytschicht 11a kommen. Dabei wird bspw. Yttrium-dotiertes Zirkondioxid an der Kathode reduziert, wobei sich die elektrische Leitfähigkeit des Festelektrolytmaterials erhöht. Dies würde zu einer Absenkung des Isolationswiderstands der Festelektrolytschicht 11a bei tiefen Temperaturen und somit zu einem verfälschten Sensorsignal führen. Um dies zu vermeiden kann bspw. die an den Messelektroden 14, 16 anliegende Messspannung periodisch umgepolt werden. Eine weitere Möglichkeit zur Vermeidung einer derartigen Zersetzung besteht darin, zu Beginn des zweiten Betriebszeitraumes kurzfristig eine so ausreichend hohe Betriebstemperatur des Sensorelementes vorzusehen, dass ggf. zuvor reduziertes Zirkondioxid durch den im Gasgemisch vorhandenen Sauerstoff wieder oxidiert wird.

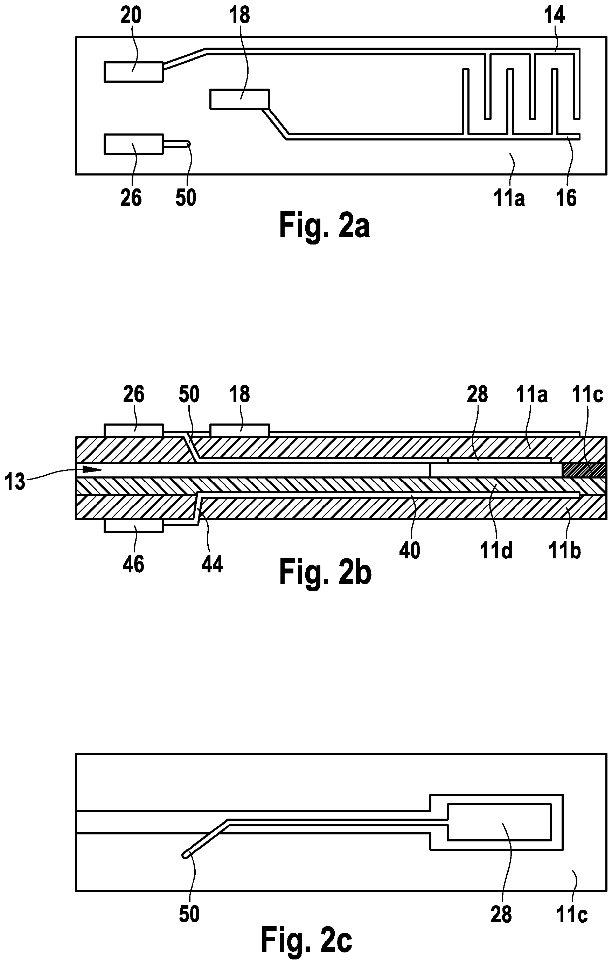

Gemäß einer weiteren Ausführungsform kann das Sensorelement auch separate Messelektroden für die Partikelmessung und für die Bestimmung einer gasförmigen Komponente des Gasgemischs vorsehen. Ein Ausführungsbeispiel einer derartigen Ausführungsform ist bspw. in den Figuren 2a bis 2c dargestellt. Dabei bezeichnen gleiche Bezugszeichen gleiche Bauteilkomponenten wie in den Figuren 1a und 1b.

Dabei ist das Sensorelement gemäß zweiter Ausführungsform gegenüber dem in den Figuren 1a und 1b dargestellten Sensorelement um zwei Festelektrolytschichten 11c und 11d erweitert, wobei in die Festelektrolytschicht 11c ein Referenzgaskanal 13 integriert ist, der vorzugsweise mit einer Referenzgasatmosphäre wie beispielsweise Luft oder Sauerstoff in Kontakt steht. Im Referenzgaskanal 13 ist beispielsweise eine Referenzelektrode 28 angeordnet, die über eine Leiterbahn und eine Durchkontaktierung 50 mit einer weiteren Kontaktfläche 26 verbunden ist. Diese Ausführungsform des Sensorelements bietet die Möglichkeit einer räumlich getrennten Bestimmung von gasförmigen und partikelförmigen Komponenten des Gasgemischs. So kann zum einen zur Bestimmung der Partikelkonzentration des Gasgemischs der elektrische Widerstand des sich zwischen den Messelektroden 14 und 16 befindenden Festelektrolytmaterials 11a bzw. sich darauf abgelagerter Partikel bestimmt werden. Räumlich davon getrennt erfolgt die Bestimmung eines Mischpotentials durch Bestimmung der Potentialdifferenz zwischen dem an der ersten Messelektrode 14 und dem an der Referenzelektrode 28 jeweils anliegenden Potenzials. Alternativ kann die Referenzelektrode auch als sogenannte gepumpte Referenz ausgeführt werden, d.h. ohne dass sie in Kontakt mit einem inneren Gasraum des Sensorelements steht.

Weiterhin können die Messelektroden 14, 16 aus geeigneten unterschiedlichen Materialien ausgeführt sein. Auf diese Weise kann bspw. durch Bestimmung der Differenz der an der ersten Messelektrode 14 und an der Referenzelektrode 28 anliegenden Potentiale eine erste gasförmige Komponente des Gasgemischs bestimmt werden und durch Bestimmung der Differenz an der zweiten Messelektrode 16 und an der Referenzelektrode 28 anliegenden Potentiale eine zweite gasförmige Komponente. Ist demnach die erste Messelektrode 14 aus Gold und die zweite Messelektrode 16 aus Platin ausgebildet, so kann simultan die Konzentration an Kohlenwasserstoffen und/oder Kohlenmonoxid einerseits und an Sauerstoff nach Gleichgewichtseinstellung andererseits ermittelt werden.

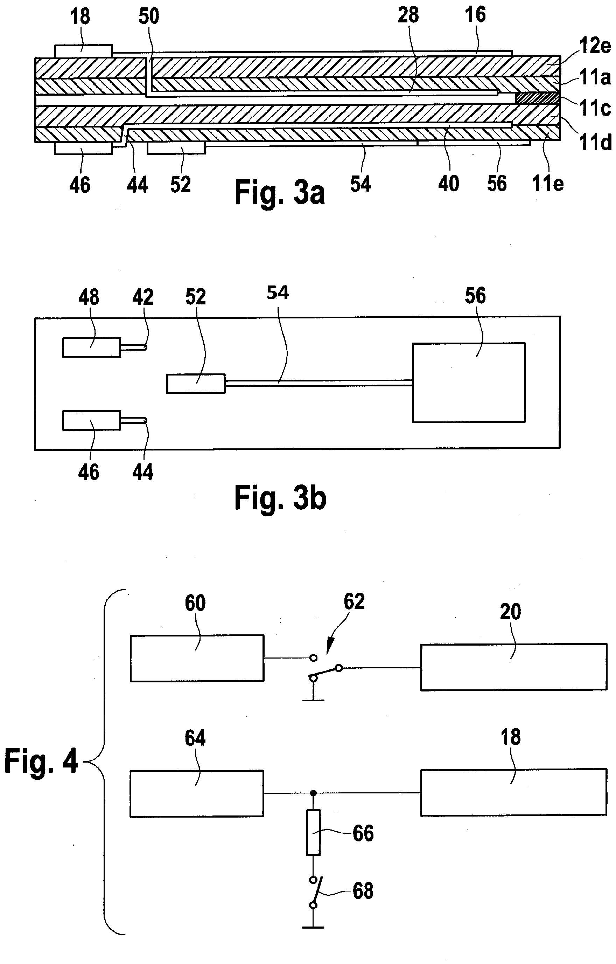

In den Figuren 3a und 3b ist ein Sensorelement gemäß einer dritten Ausführungsform der vorliegenden Erfindung dargestellt. Dieses weist neben den Festelektrolytschichten 11a bis 11d eine weitere elektrisch isolierende Schicht 12e auf. Auf dieser sind die Messelektroden 14 und 16 platziert wobei bei diesem Ausführungsbeispiel die Referenzelektrode 28 über die Durchkontaktierung 50 elektrisch mit der Messelektrode 16 bzw. der Kontaktfläche 18 verbunden ist. Weiterhin weist das Sensorelement gemäß dritter Ausführungsform eine zusätzliche Arbeitselektrode 56 auf, die über eine Leiterbahn 54 mit einer weiteren Kontaktfläche 52 verbunden ist. Das Sensorelement gestattet die Bestimmung von partikelförmigen Komponenten des Gasgemischs mittels der Messelektroden 14, 16 wobei durch Aufbringung derselben auf die weitere elektrisch isolierende Schicht 12e eine verbesserte Bestimmung des sich durch Anlagerung von Partikeln verändernden elektrischen Widerstandes ermöglicht wird. Weiterhin gestattet das Sensorelement die Bestimmung gasförmiger Komponenten des Gasgemischs; dies erfolgt mittels der Arbeitselektrode 56 als Mischpotentialelektrode und mittels der Referenzelektrode 28, wobei die Bestimmung einer Differenzbildung der an der Arbeitselektrode 56 und der Referenzelektrode 28 anliegenden Potenziale wie bereits beschrieben erfolgt. Auf diese Weise kann eine räumliche Trennung beider Messprinzipien innerhalb des Sensorelementes erreicht werden.

In Figur 4 ist eine mögliche Beschaltung eines Sensorelements gemäß Figur 1a und 1b schematisch dargestellt. So steht beispielsweise die Kontaktfläche 20, die elektrisch mit der ersten Messelektrode 14 verbunden ist, innerhalb des ersten Betriebszeitraums zur Bestimmung der Partikelkonzentration mit einer Spannungsversorgung 60 in Kontakt, die es ermöglicht, an die erste Messelektrode 14 eine Spannung von 10 bis 50 Volt, insbesondere von 20 bis 45 Volt anzulegen. Während des zweiten Betriebszeitraumes zur Bestimmung gasförmiger Bestandteile des Gasgemischs ist die Kontaktfläche 20 vorzugsweise elektrisch auf Masse gelegt. Die Umschaltung erfolgt mittels eines ersten Schalters 62.

Die zweite Kontaktfläche 18 steht in elektrischem Kontakt mit der zweiten Messelektrode 16. Während des ersten Betriebszeitraumes ist die zweite Kontaktfläche 18 elektrisch mit einem Spannungsverstärker bzw. Spannungsmesser 64 verbunden, sodass mittels des Spannungsmessers 64 eine Potentialdifferenz der an den Messelektroden 14, 16 anliegenden Potentiale erfasst werden kann. Während des zweiten Betriebszeitraumes wird ein sogenannter Shunt- oder Nebenwiderstand 66 zugeschaltet, der mittels eines weiteren Schalters 68 auf Masse gelegt werden kann. Die von der Spannungsversorgung 60 an der Kontaktfläche 20 angelegte Spannung fällt sowohl an dem sich durch Partikelanlagerung verändernden elektrischen Widerstand in Form des sich zwischen den Messelektroden 14, 16 befindenden Sensormaterials als auch am Shuntwiderstand 66 ab. Durch Bestimmung des zwischen den Messelektroden 14, 16 fließenden Messstromes kann die Höhe des elektrischen Widerstandes des durch die Messelektroden 14, 16 gebildeten Widerstandes bestimmt werden. Durch die Verwendung der ggf. miteinander gekoppelten Schalter 62, 68 kann somit zwischen der Messung eines durch die Partikelanlagerung bedingten Stromes und der stromlosen Messung eines Mischpotentials umgeschaltet werden.

So kann mit Hilfe eines einzigen Sensors sowohl die Überwachung der Funktionsfähigkeit eines Partikelfilters durch Bestimmung der Partikelkonzentration in einem den Partikelfilter verlassenden Abgases als auch die Überwachung bzw. Regelung von anderen, insbesondere mit katalytischen Funktionen ausgestatteten Komponenten eines Abgassystems erfolgen. Insbesondere ist eine Überwachung von Oxidationskatalysatoren durch Bestimmung der Konzentration an Kohlenwasserstoffen und/oder Kohlenmonoxid im Abgas in Strömungsrichtung nach dem Oxidationskatalysator möglich.

Weiterhin ist es möglich, anstatt einer Messung des an den Messelektroden 14, 16 anliegenden Potentials bei Vorgabe einer konstanten Spannung ein zwischen den Messelektroden 14, 16 auftretenden Pumpstrom zu bestimmen.

## Patentansprüche

1. Verfahren zur Bestimmung von Bestandteilen eines Gasgemisches, insbesondere eines Abgases von Verbrennungsmotoren mit einem Sensorelement (10) mit mindestens zwei ersten auf einem keramischen Festelektrolytmaterial aufgebrachten Messelektroden (14, 16), wobei die zwei ersten Messelektroden (14, 16) zur Bestimmung der Konzentration an Partikeln in einem Gasgemisch vorgesehen sind und wobei zwei weitere Messelektroden (28, 56) zur Bestimmung der Konzentration mindestens einer gasförmigen Komponente des Gasgemisches vorgesehen sind und wobei das Festelektrolytmaterial zumindest bereichsweise eine die elektrische Leitfähigkeit des Festelektrolytmaterials herabsetzende Materialkomponente enthält, wobei die Bestimmung der Konzentration an Partikeln durch Bestimmung eines elektrischen Widerstandes zwischen den ersten Messelektroden (14, 16) erfolgt, wobei zeitversetzt die Konzentration an Partikeln und die Konzentration zumindest einer gasförmigen Komponente des Gasgemisches mit demselben Sensorelement (10) bestimmt wird und die Bestimmung der Konzentration der gasförmigen Komponente durch Bestimmung eines an den weiteren Messelektroden (28, 56) des Sensorelementes (10) anliegenden elektrischen Potentials erfolgt, wobei in einem ersten Zeitraum die Bestimmung der Konzentration an Partikeln erfolgt und in einem zweiten Zeitraum die Bestimmung der mindestens einen gasförmigen Komponente des Gasgemisches erfolgt und im ersten Zeitraum das Sensorelement auf der Temperatur des zu messenden Gasgemisches gehalten wird und im zweiten Zeitraum das Sensorelement auf eine Temperatur von mindestens 450°C aufgeheizt wird.

2. Verfahren nach Anspruch 1, **dadurch gekennzeichnet, dass** zumindest während der Bestimmung der Konzentration an Partikeln die an die zwei ersten Elektroden (14, 16) des Sensorelementes (10) angelegte Spannung periodisch umgepolt wird oder eine gepulste Spannung angelegt wird.

3. Verfahren nach Anspruch 1 oder 2 **dadurch gekennzeichnet, dass** das Sensorelement (10) bei Übergang vom ersten in den zweiten Zeitraum zumindest kurzzeitig auf eine Temperatur aufgeheizt wird, die über der Temperatur während des zweiten Zeitraumes liegt.

4. Verfahren nach einem der vorangehenden Ansprüche, **dadurch gekennzeichnet, dass** die die elektrische Leitfähigkeit des Festelektrolytmaterial herabsetzende Materialkomponente eine Dotierung mit CaO ist.

5. Verfahren nach einem der vorangehenden Ansprüche, dass die die elektrische Leitfähigkeit des Festelektrolytmaterial herabsetzende Materialkomponente aus Partikeln eines elektrisch isolierenden keramischen Materials gebildet ist.

6. Verfahren nach einem der vorangehenden Ansprüche **dadurch gekennzeichnet, dass** eine der ersten Messelektroden (14) Platin umfasst und dass die andere der ersten Messelektroden (16) eine mit Gold und/oder Silber dotierte Platinelektrode ist.

7. Verwendung eines Verfahrens nach einem der vorangehenden Ansprüche zur Kontrolle der Funktionstüchtigkeit eines in Strömungsrichtung vor dem Sensorelement angeordneten Partikelfilters und/oder eines Oxidationskatalysators.

8. Verwendung nach Anspruch 7, **dadurch gekennzeichnet, dass** bei Messung einer Partikelkonzentration, die über einer vorgegebenen Partikelkonzentration liegt, eine die Funktionsuntüchtigkeit des Partikelfilter und/oder des Oxidationskatalysators konstatierende Fehlermeldung ausgegeben wird.

## Claims

1. Method for determining constituents of a gas mixture, in particular of an exhaust gas of internal combustion engines, having a sensor element (10) with at least two first measuring electrodes (14, 16) applied to a ceramic solid electrolyte material, wherein the two first measuring electrodes (14, 16) are provided for determining the concentration of particles in a gas mixture, and wherein two further measuring electrodes (28, 56) are provided for determining the concentration of at least one gaseous component of the gas mixture, and wherein the solid electrolyte material at least regionally comprises a material component which reduces the electrical conductivity of the solid electrolyte material, wherein the determination of the concentration of particles is performed by determination of electrical resistance between the first measuring electrodes (14, 16), wherein, offset in terms of time, the concentration of particles and the concentration of at least one gaseous component of the gas mixture are determined using the same sensor element (10), and the determination of the concentration of the gaseous component is performed by determination of an electrical potential prevailing at the further measuring electrodes (28, 56) of the sensor element (10), wherein the determination of the concentration of particles is performed in a first time period, and the determination of the at least one gaseous component of the gas mixture is performed in a second time period, and in the first time period, the sensor element is kept at the temperature of the gas mixture to be measured, and in the second time period, the sensor element is heated to a temperature of at least 450°C.

2. Method according to Claim 1, **characterized in that**, at least during the determination of the concentration of particles, the voltage applied to the two first electrodes (14, 16) of the sensor element (10) is periodically reversed in polarity, or a pulsed voltage is applied.

3. Method according to Claim 1 or 2, **characterized in that**, upon the transition from the first time period to the second time period, the sensor element (10) is at least briefly heated to a temperature which lies above the temperature during the second time period.

4. Method according to one of the preceding claims, **characterized in that** the material component which reduces the electrical conductivity of the solid electrolyte material is a doping with CaO.

5. Method according to one of the preceding claims, that the material component which reduces the electrical conductivity of the solid electrolyte material is formed from particles of an electrically insulating ceramic material.

6. Method according to one of the preceding claims, **characterized in that** one of the first measuring electrodes (14) comprises platinum, and **in that** the other of the first measuring electrodes (16) is a platinum electrode doped with gold and/or silver.

7. Use of a method according to one of the preceding claims for monitoring the functionality of a particle filter, which is arranged upstream of the sensor element in a flow direction, and/or of an oxidation catalytic converter.

8. Use according to Claim 7, **characterized in that**, in the event of a particle concentration being measured which exceeds a predefined particle concentration, a fault message stating that the particle filter and/or the oxidation catalytic converter are/is non-functional is output.

## Revendications

1. Procédé pour déterminer les composantes d'un mélange gazeux, notamment des gaz d'échappement de moteurs à combustion interne, avec un élément de détection (10) comprenant au moins deux premières électrodes de mesure (14, 16) appliquées sur un matériau électrolyte solide céramique, les deux premières électrodes de mesure (14, 16) étant conçues pour déterminer la concentration de particules dans un mélange gazeux et deux électrodes de mesure supplémentaires (28, 56) servant à déterminer la concentration d'au moins une composante gazeuse du mélange gazeux étant présentes, et le matériau électrolyte solide contenant au moins dans certaines zones une composante de matériau qui abaisse la conductivité électrique du matériau électrolyte solide, la détermination de la concentration de particules étant effectuée en déterminant une résistance électrique entre les premières électrodes de mesure (14, 16), la concentration de particules et la concentration d'au moins une composante gazeuse du mélange gazeux étant déterminées avec un décalage dans le temps par le même élément de détection (10) et la détermination de la concentration de la composante gazeuse étant effectuée en déterminant un potentiel électrique présent au niveau des électrodes de mesure supplémentaires (28, 56) de l'élément de détection (10), la détermination de la concentration de particules s'effectuant dans une première période et la détermination de l'au moins une composante gazeuse du mélange gazeux s'effectuant dans une deuxième période et, dans la première période, l'élément de détection étant maintenu à la température du mélange gazeux à mesurer et, dans la deuxième période, l'élément de détection étant chauffé à une température d'au moins 450 °C.

2. Procédé selon la revendication 1, **caractérisé en ce qu'**au moins pendant la détermination de la concentration de particules, la tension appliquée aux deux premières électrodes de mesure (14, 16) de l'élément de détection (10) est soumise à une inversion de polarité périodique ou alors la tension appliquée est pulsée.

3. Procédé selon la revendication 1 ou 2, **caractérisé en ce que** lors de la transition de la première à la deuxième période, l'élément de détection (10) est brièvement chauffé à une température qui est supérieure à la température pendant la deuxième période.

4. Procédé selon l'une des revendications précédentes, **caractérisé en ce que** la composante de matériau qui abaisse la conductivité électrique du matériau électrolyte solide est un dopage avec du CaO.

5. Procédé selon l'une des revendications précédentes, que la composante de matériau qui abaisse la conductivité électrique du matériau électrolyte solide est constituée de particules d'un matériau céramique électriquement isolant.

6. Procédé selon l'une des revendications précédentes, **caractérisé en ce que** l'une des premières électrodes de mesure (14) comprend du platine et **en ce que** l'autre des premières électrodes de mesure (16) est une électrode en platine dopée avec de l'or et/ou de l'argent.

7. Utilisation d'un procédé selon l'une des revendications précédentes pour le contrôle de la capacité de fonctionnement d'un filtre à particules et/ou d'un catalyseur à oxydation monté avant l'élément de détection dans le sens de l'écoulement.

8. Utilisation d'un procédé selon la revendication 7, **caractérisé en ce qu'**en cas de mesure d'une concentration de particules qui est supérieure à une concentration de particules prédéfinie, un message d'erreur constatant l'incapacité de fonctionnement du filtre à particules et/ou du catalyseur à oxydation est délivré.
